Europäisches Patentamt

(19) European Patent Office

Office européen des brevets

(11) Publication number: **0 007 203**

**A1**

(12) **EUROPEAN PATENT APPLICATION**

(21) Application number: **79301260.0**

(22) Date of filing: **29.06.79**

(51) Int. Cl.³: **A 62 C 3/16**
**H 02 G 3/04, F 16 L 57/00**

(30) Priority: **03.07.78 GB 2860878**

(43) Date of publication of application:
**23.01.80 Bulletin 80/2**

(84) Designated Contracting States:
**AT BE CH DE FR GB IT LU NL SE**

(71) Applicant: **BICC Limited**
**21, Bloomsbury Street**
**London, WC1B 3QN(GB)**

(72) Inventor: **Crew, Eric William**
**26 St. David's Drive**
**Broxbourne, Hertfordshire EN10 7LS(GB)**

(74) Representative: **Ross Gower, Edward Lewis et al,**
**BICC Limited Patents Department 38 Wood Lane**
**London, W12 7DX(GB)**

(54) **An improved cable support system.**

㊗ An electric cable and/or service pipe support comprises an elongate metal duct (1) divided transversely of its length into at least two separately formed parts that are detachably secured together and, housed in the duct, metal means (2) for supporting at least one electric cable and/or service pipe. At least one part of the duct has at spaced positions along its length, for cooling purposes, ventilation holes (11) for passage of air into and out of the duct.

A plurality of separately operable ventilation hole-closure devices (4) are mounted in and arranged at spaced positions along the length of the duct, each adapted to close automatically a group of ventilation holes when the temperature outside the duct reaches or exceeds a predetermined value. Preferably, each ventilation hole-closure device (4) is a flat plate normally supported in such a position with respect to the ventilation holes that air can flow into and out of the duct but which, when automatically operated, moves in such a direction and to such an extent as to close the ventilation holes.

Fig.2.

- 1 -

## AN IMPROVED CABLE SUPPORT SYSTEM

This invention relates to electric cable and/or service pipe supports in which protection is provided against the effects of external fires.

According to the invention an improved electric cable and/or service pipe support comprises metal means for supporting at least one electric cable and/or at least one service pipe; an elongate metal duct housing said support means and divided transversely of its length into at least two separately formed parts that are detachably secured together, at least one of said separately formed parts having at spaced positions along its length, for cooling purposes, a ventilation hole or ventilation holes for passage of air into or out of the duct; and, mounted in the duct, means for closing said ventilation holes automatically when the temperature outside the duct reaches or exceeds a predetermined value.

The predetermined temperature near the outer surface of the duct at which the ventilation hole-closure means will automatically operate can be arranged to ensure transversely of the duct and towards said wall to close the ventilation holes. In the latter arrangement, air entering the duct through ventilation holes will flow between adjacent closure plates and around the electric cables and/or service pipes but, for improved air circulation in the duct, preferably each closure plate itself has a plurality of apertures which are not in direct alignment with the associated ventilation holes and which, when the closure plate is automatically operated to close the ventilation holes, will themselves be closed by the wall of the duct.

Any convenient form of mechanism may be used to hold the closure plate in the "open" position and, when automatically operated, to move it into the " closed" position but, preferably, when the closure plate has been moved into the "closed" position, e.g. by a spring or springs, the arrangement is such that the closure plate is locked in this position, e.g. by a toggle mechanism, by a cam or by a lever following a specially shaped slot. One simple form of toggle mechanism that may be employed to lock the closure plate in the "closed" position is at least one lever which, at one of its ends, is pivoted above the closure plate and which, at the other of its ends, bears against the closure plate, the lever being so spring loaded that it is urged towards a position in which it will lie with its axis substantially normal to the

- 2 -

that in the event of an external fire the maximum safe temperature that the sheath of an electric cable and/or a service pipe can withstand will not be exceeded, closing of the ventilation holes preventing the ingress into the duct of flames or hot gas.

Preferably, the electric cable and/or service pipe support has a plurality of separately operable ventilation hole-closure devices arranged at spaced positions along the length of the duct, each adapted to close a group of ventilation holes.

Each ventilation hole-closure device preferably comprises a substantially flat plate or sheet, preferably a metal plate or sheet having a layer or coating of thermal insulating material and/or heat absorbing material, the closure device being normally supported in such a position with respect to the ventilation holes it is arranged to close that air can flow into and out of the duct but which, when automatically operated, moves with respect to the duct in such a direction and to such an extent as to close said ventilation holes. The closure plate may be arranged to move lengthwise with respect to the duct to close the ven-- tilation holes but, with a view to reducing the risk that efficient operation of the ventilation hole-closure device may be prevented by distortion of the duct under external fire conditions, preferably the closure plate is spaced from the wall of the duct in which the ventilation holes are present, and when automatically operated, is moved

- 5 -

In all cases, each ventilation hole may be of any suitable shape, for example a circular hole or a rectangular slot.

To provide further protection against the effects of external fire at least one perforated pipe or other elongate perforated chamber may be housed in the duct for the purpose of introducing a non-flammable cooling fluid, e.g. water, into the duct on to the internal surface of the duct walls and/or on to electric cables and/or service pipes supported in the duct. Alternatively, or additionally, at least part of the length of the duct may be lined with a continuous wall of thermal insulating material and/or thermal absorbing material, provided that the ventilation holes are not obstructed and that the efficiency of operaton of the ventilation hole-closure devices is not reduced. One form of such lining may be built up of a plurality of separate containers shaped to fit against the walls of the duct and containing water or other non-flammable cooling fluid. Such containers may be closed flexible envelopes or metal enclosures preferably housing closed flexible envelopes.

The invention will be further illustrated by a description, by way of example, of three preferred forms of cable support with reference to the accompanying drawings, in which:

Figure 1 is a fragmental side view of the first form of cable support with the operating mechanism of the closure plates omitted;

Figure 2 is a transverse cross-sectional view of the cable support taken on the line II-II in Figure 1;

Figure 3 is a plan view of a closure plate;

Figure 4 is a side view of the operating mechanism of a closure plate;

Figure 5 is a fragmental view of the release device of the operating mechanism when in the "open" position during automatic actuation; .

Figure 6 is a fragmental side view of the operating mechanism of a closure plate of a second form of cable support, and

Figure 7 is a transverse cross-sectional view of the third form of cable support.

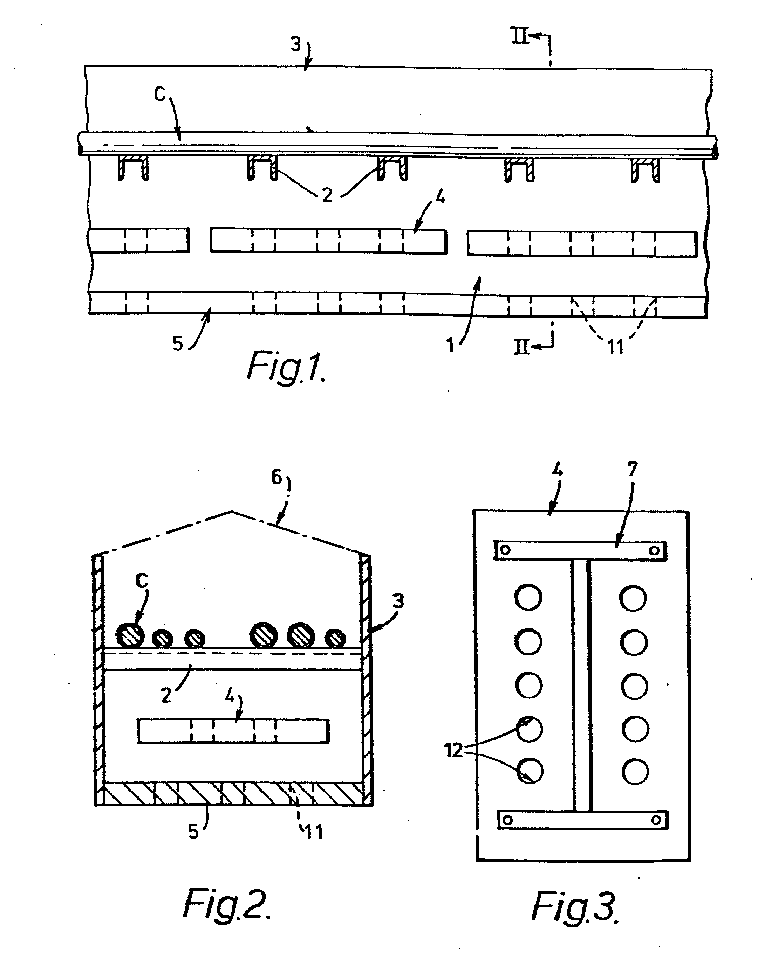

Referring to the drawings, the first form of electric cable and/or service pipe support shown in Figures 1 to 5 comprises an elongate metal duct 1 comprising a part 3 of substantially channel-shaped cross-section, a separately formed cover 6 and, extending transversely of the duct at spaced positions along its length, a plurality of elongate metal members 2 on which electric cables C can be supported. The bottom wall 5 of the channel-shaped part 3 has, at spaced positions along its length, ventilation holes 11.

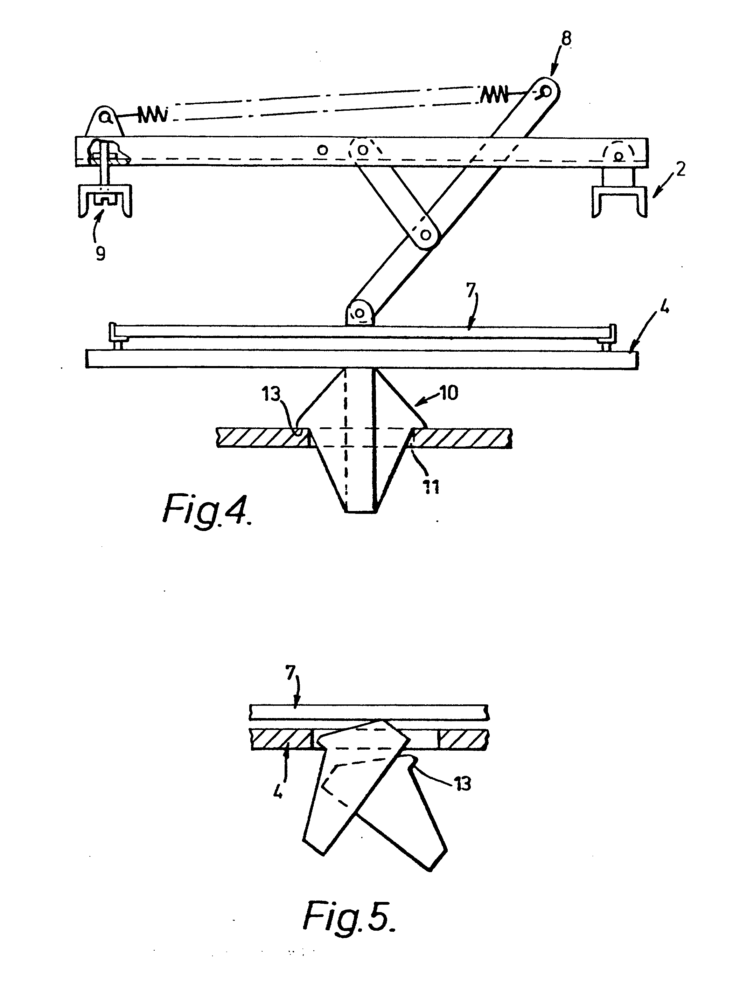

At each of a plurality of spaced positions along the length of the duct 1 is a closure plate 4 made partly of thermal insulating material which is supported from transversely extending members 2 by a spring loaded toggle mechanism 8 (Figure 4). The toggle mechanism 8 is pivotally connected to the centre of a metal framework 7 which is secured to the upper surface of the closure plate 4 and which transmits the centrally applied force to the four corners of the plate, the arrangement being such that the plate 4 is urged towards the bottom wall 5 by the spring of the toggle mechanism. The plate 4 has apertures 12 for flow of air, the apertures not being in direct alignment with the associated ventilation holes 11. Movement of the closure plate 4 is normally prevented by a release device 10 (Figures 4 and 5) which comprises two sheet metal components rigidly held together by solder which melts at a temperature of about 70$^{O}$C, the release device being positioned so that shoulders 13 at each side of the device, rest on the bottom wall 5 on diametrically opposite sides of one of the ventilation holes 11 and an upper part of the device supports the closure plate to prevent it moving to the closed position until the solder melts. A lower part of the release device 10 projects through the hole 11 so that it will sense the temperature of the surrounding atmosphere. To ensure quick response to external heat, the sheet metal components of the release device 10 may be of high conductivity metal, e.g. copper. Holes may be included in the components to facilitate soldering or the use of solder or plugs or rivets of plastics material. In order to provide satisfactory bearing surfaces, the shoulders 13 of the release device 10 which rest on the bottom wall 5 and the part of the release device on which the closure plate 4 is supported may be thickened or flanged.

In the event of an external fire of such intensity that the temperature outside the duct rises to above the predetermined value of 70°C, the solder rigidly holding together the components of the release device 10 melts, the components are ejected through the ventilation hole 11 (Figure 5) under the action of the spring of the toggle mechanism 8 and the closure plate 4 is moved into the closed position to close the ventilation holes 11, the closure plate being locked in the closed position by the toggle mechanism, which has previously been suitably adjusted by means of the screw 9.

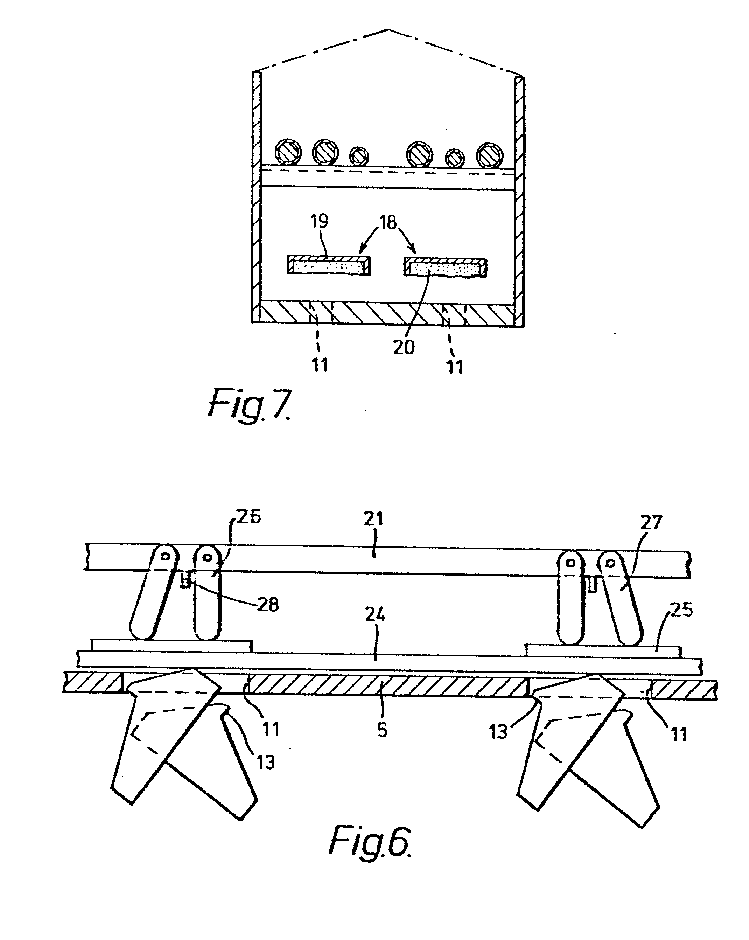

The second form of cable support is substantially identical to the cable support shown in Figures 1 to 5 except for the operating mechanism of each closure plate and, in Figure 6, where component parts are identical to those of the cable support shown in Figures 1 to 5, the same numerical references have been employed. Referring to Figure 6, a closure plate 24 is supported above and spaced from the bottom wall 5 of the duct by release devices 10 so that, in normal use, air can flow through the ventilation holes 11 to cool the interior of the duct.

Urging the closure plate 24 downwardly towards the bottom wall 5 are pairs of spring loaded levers 26, 27 which are pivoted from a member 21 supported from transversely extending members (not shown) and whose lower ends are curved and bear against raised lands 25 on the closure plate. The springs (not shown) of the levers 26, 27 are of such a form and are so mounted as to urge the levers towards a position in which they lie with their axes normal to the plane of the closure plate.

In the event of an external fire of an intensity sufficient to melt the solder rigidly holding together the components of the release devices 10 the components are ejected through the ventilation holes 11 as shown in the Figure under the action of the spring loaded pivoted levers 26, 27, pivotal movement of the levers beyond the position at which their axes lie normal to the plane of the closure plate being prevented by stops 28 depending from the member 21. As will be seen, lever 27 of each pair is slightly longer than lever 26 (or it could be of the same length but with its pivotal axis closer to the closure plate than that of lever 26) so that it continues to urge the closure plate towards the bottom wall 5 after the lever 26 has reached its full limit of pivotal movement and is holding the closure plate against the bottom wall. This provides a closing force on the closure plate should some distortion of the bottom wall 5 of the duct have taken place due to the external fire.

The space between the raised lands 25 on the upper surface of the plate 24 is usually filled with thermally insulating material.

In the cable support shown in Figure 7, each of a plurality of separately operable ventilation hole-closure devices 18 comprises a strip 19 having a layer of intumescent material 20 on the side facing the bottom wall of the duct. Each strip 19 is supported at each of its ends (not shown in Figure 7) and can be readily removed and replaced. In this arrangement there are no moving parts and in the event of an external fire which will cause heat and/or flames to enter the ventilation holes 11, the intumescent material 20 on the strips 19 will rapidly expand and block the ventilation holes thereby restricting the extent to which heat and/or flames can reach the cables supported in the duct.

Although in the description of the three forms of cable support illustrated in the drawings, it is implied that the cable ducts lie in a substantially horizontal plane, it is to be understood that the or any cable duct of a cable support according to the present invention can be arranged at any angle to the horizontal provided that appropriate minor modifications are made to the operation of the ventilation hole-closure devices.

- 11 -

What we claim is:

1.       An electric cable and/or service pipe support comprising metal means for supporting at least one electric cable and/or at least one service pipe, and an elongate metal duct housing said support means and divided transversely of its length into at least two separately formed parts that are detachably secured together, wherein at least one of said separately formed parts has at spaced positions along its length, for cooling purposes, a ventilation hole or ventilation holes for passage of air into and out of the duct and wherein, there is mounted in the duct means for closing said ventilation holes automatically when the temperature outside the duct reaches or exceeds a predetermined value.

2.       An electric cable and/or service pipe support as claimed in Claim 1, wherein a plurality of separately operable ventilation hole-closure devices is arranged at spaced positions along the length of the duct, each adapted to close a group of ventilation holes.

3.      An electric cable and/or service pipe support comprising metal means for supporting at least one electric cable and/or at least one service pipe, and an elongate metal duct housing said support means and divided transversely of its length into at least two separately formed parts that are detachably secured together, wherein at least one of said separately formed parts has at spaced positions along its length, for cooling purposes, a ventilation hole or ventilation holes for passage of air into and out of the duct and wherein, there is mounted in the duct, a plurality of ventilation hole-closure devices arranged at spaced positions along the length of the duct, each comprising a substantially flat plate or sheet normally supported in such a position with respect to a group of ventilation holes it is arranged to close that air can flow into and out of the duct but which, when automatically operated moves with respect to the duct in such a direction and to such an extent as to close said ventilation holes.

4.      An electric cable and/or service pipe support as claimed in Claim 3, wherein each closure plate is spaced from the wall of the duct in which the ventilation holes are present, and when automatically operated, is moved transversely of the duct and towards said wall to close the ventilation holes.

5.      An electric cable and/or service pipe support as claimed in Claim 4, wherein each closure plate itself has a plurality of apertures which are not in direct alignment with the associatedventilation holes and which, when the closure plate is automatically operated to close the ventilation holes, will themselves be closed by the wall of.the duct.

6 .      An electric cable and/or service pipe support as claimed in any one of Claims 3 to 5, wherein each closure plate has an associated spring loaded toggle mechanism or other means for locking the closure plate in the closed position.

7.      An electric cable and/or service pipe support as claimed in Claim 6, wherein the toggle mechanism comprises at least one lever which, at one of its ends, is pivoted above the closure plate and which, at the other of its ends, bears against the closure plate, the lever being so spring loaded that it is urged towards a position in which it will lie with its axis substantially normal to the closure plate, in which position the closure plate will be in its closed position.

8.      An electric cable and/or service pipe support as claimed in any one of Claims 3 to 7, wherein automatic operation of each closure plate is controlled by a release device which is exposed to the external environment and which will actuate the closure plate at said predetermined temperature.

9.      An electric cable and/or service pipe support as claimed in Claim 8, wherein the release device comprises at least two separate members secured together by solder or other metal alloy or plastics material which will melt at said predetermined temperature to actuate the release device and allow the closure plate to move into the closed position.

10.      An electric cable and/or service pipe support as claimed in Claim 1 or 2, wherein each of the separately operable ventilation hole-closure devices comprises a strip of metal or metal alloy which is detachably supported above a ventilation hole or a group of ventilation holes and which carries a layer of intumescent material on its surface facing the ventilation hole or holes, the arrangement being such that, in the event that heat and/or flames caused by an external fire enter the duct through a ventilation hole or ventilation holes, the intumescent material will swell and block the hole or holes.

Fig.1.

Fig.2.

Fig.3.

0007203

2/3

Fig.4.

Fig.5.

Fig.7.

Fig.6.

0007203

## DOCUMENTS CONSIDERED TO BE RELEVANT

| Category | Citation of document with indication, where appropriate, of relevant passages | Relevant to claim |
|---|---|---|
| X | FR - A - 2 326 947 (PROMAT)<br>* Page 1, lines 1-4, 26-28; page 2, lines 16-21; page 3, lines 25-40; page 4, lines 1-17, 33-40; page 5, lines 1-10; page 7, lines 4-40; page 12, lines 1-24, 30-40; page 14, lines 17,18 *<br><br>-- | 1-5, 8-10 |
| | DE - A - 2 259 679 (GRAEPEL)<br>* Page 5, lines 3-11, 22,23; page 7, lines 2,3 *<br><br>-- | 1,3 |
| | US - A - 2 573 160 (NORMAN)<br>* Column 3, line 56 to column 4, line 32; figures 1,2 *<br><br>-- | 6-8 |
| | FR - A - 2 082 240 (LEVASSEUR)<br>* Page 1, lines 1-8, 19-40; page 2, lines 1-6 *<br><br>-- | 6,8,9 |
| | US - A - 2 887 194 (NOLTIN)<br>* Column 2, lines 39-48; column 4, lines 12-16, 53-57; column 5, lines 3-28 *<br><br>-- | 8,9 |
| | DE - A - 1 658 786 (CORK)<br>* Page 3, lines 1-10; figure 2 * | 8 |

·/·

The present search report has been drawn up for all claims

**CLASSIFICATION OF THE APPLICATION (Int. Cl. 3)**

A 62 C 3/16
H 02 G 3/04
F 16 L 57/00

**TECHNICAL FIELDS SEARCHED (Int.Cl. 3)**

H 02 G 3/03
H 02 G 3/04
E 05 F 1/00
A 62 C 3/16
F 16 L 57/00

| Place of search | Date of completion of the search | Examiner |
|---|---|---|
| The Hague | 24-09-1979 | TIELEMANS |

EPO Form 1503.1 06.78

0007203

European Patent Office

**EUROPEAN SEARCH REPORT**

Application number

EP 79 30 1260
-2-

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| PE | GB - A - 2 001 483 (BURNDY) | 1,3,5, 10 | |
| PE | & BE - A - 869 111 (BURNDY) | | |
| PE | & DE - A - 2 831 976 (BURNDY) | | |
| PE | & FR - A - 2 398 153 (BURNDY) | | |
| PE | & NL - A - 78 07797 (BURNDY) | | |
| | * Page 1, lines 6-24, 61-90; page 4, lines 79-88, 101-104; page 5, lines 47-73 * | | |
| | ---- | | TECHNICAL FIELDS SEARCHED (Int. Cl. 3) |

EPO Form 1503.2  06.78